# EUROPEAN PATENT APPLICATION

(11) **EP 2 202 861 A2**
(43) Date of publication of application: **30.06.2010**
(21) Application number: 09178619.4
(22) Date of filing: 10.12.2009
(51) Int. Cl.: H02H 3/33

(54) **Method and apparatus for tripping circuit breaker**

(30) Priority: 26.12.2008 US 344318
(71) Applicant: General Electric Company, Schenectady, NY 12345 (US)
(72) Inventor: Williams, Craig Benjamin, Louisville, KY 40245 (US)
(74) Representative: Illingworth-Law, William Illingworth

(57) **Abstract**

An apparatus for monitoring a circuit breaker (100) includes an electronics unit (140), the electronics unit (140) being configured to generate a re-occurring signal, and a self-test trip unit (150) in signal communication with the electronics unit and being configured to receive the re-occurring signal and effect tripping of the circuit breaker.

## Description

### Background

### Field

The subject matter described herein relates generally to devices and methods for circuit breaker assemblies and, more particularly, to tripping a circuit breaker in the event of a loss of electronic fault protection of the circuit breaker.

### Related Art

Circuit breakers currently used to protect, for example, a residential or commercial environment generally detect the presence of overcurrent conditions and release an operating mechanism to separate the circuit breaker contacts. These operating mechanisms may include electronic trip units including, for example, ground fault circuit interrupters (GFCI) that sense, for example, a current imbalance between the phase and neutral conductors of the circuit breakers and opens or trips the circuit.

These electronic trip units should be tested periodically to ensure proper operation however, it is believed that most users of the electronic trip units do not test the electronic trip units as recommended. Some users may not be aware of the importance of regular testing, while others may lose track of time between testing or forget to test the units. Even if periodic testing is performed a failure of the electronic trip unit could occur between the tests rendering the electronic trip unit inoperable without any indication to the user.

Accordingly, there is a need for circuit breaker that is capable of monitoring a status of its electronic fault protection and shutting off a circuit in the event of improper operation of the electronic fault protection.

### Brief Description of the Embodiments

In accordance with one exemplary embodiment, an apparatus for monitoring a circuit breaker is provided. The apparatus for monitoring the circuit breaker includes an electronics unit, the electronics unit being configured to generate a re-occurring signal, and a self-test trip unit in signal communication with the electronics unit and being configured to receive the re-occurring signal and effect tripping of the circuit breaker.

In accordance with another exemplary embodiment, a circuit breaker is provided. The circuit breaker includes an interrupter configured to detect a predetermined electrical condition of circuit protected by the circuit breaker and cause a tripping of the circuit breaker upon detection of the predetermined electrical condition, an electronics unit, the electronics unit being configured to generate a signal, and a self-test trip unit being configured to receive the signal and effect tripping of the circuit breaker when a re-occurring pulse of the signal is not received within a predetermined time interval.

In accordance with yet another exemplary embodiment, a method for tripping a circuit breaker is provided. The method includes producing a pulse signal, receiving the pulse signal in a self-test trip unit of the circuit breaker, and tripping the circuit breaker if the pulse signal is not received within a predetermined time interval of a time out filter of the self-test trip unit.

### Brief Description of the Drawings

The following detailed description is made with reference to the accompanying drawings, in which:

Figure 1 is a schematic illustration of a circuit breaker in accordance with an exemplary embodiment;

Figure 2 is a schematic illustration of an exemplary circuit of the circuit breaker of Figure 1;

Figure 2A is another schematic illustration of an exemplary circuit of the circuit breaker of Figure 1; and

Figure 3 is a flow diagram in accordance with an exemplary embodiment.

### Detailed Description of the Preferred Embodiments

In one embodiment, a method and apparatus for tripping a circuit breaker upon a loss of electronic protection is provided. Although the embodiments disclosed will be described with reference to the drawings, it should be understood that the embodiments disclosed can be embodied in many alternate forms. In addition, any suitable size, shape or type of elements or materials could be used.

The disclosed embodiments provide for the addition of a self-test trip unit including a timeout filter to the electronics within a circuit breaker to cause the breaker to trip or open the circuit if a predetermined condition or problem arises with the circuit breaker electronics. The self-test trip unit in accordance with the exemplary embodiments may be reset to a non-trip condition when a pass signal is applied to the self-test trip unit. The pass signal re-occurs within a predetermined period of time to periodically reset the self-test trip unit so that the circuit breaker is not tripped. As will be described in greater detail below, the pass signal may be generated by the circuit breaker electronics when the circuit breaker electronics pass an automatic self-test. If the pass signal fails to re-occur within the predetermined period of time the self-test trip unit causes the circuit breaker to trip. The self-test trip unit disclosed herein may be used in conjunction with other fault detection capabilities of the circuit breaker so that either the self-test trip unit or one of the other fault detection capabilities can trip the circuit breaker.

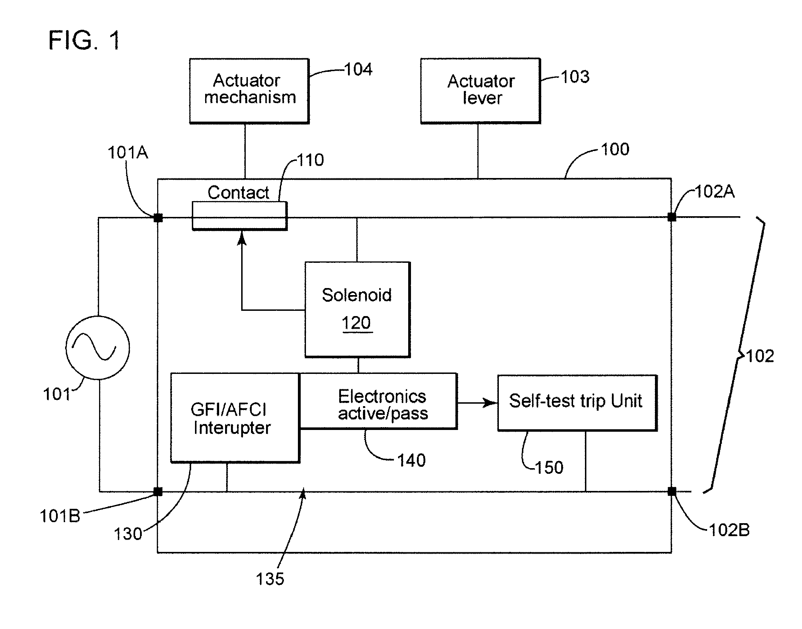

Referring now to Figure 1, a schematic illustration of a circuit breaker 100 in accordance with an exemplary embodiment is shown. It should be understood that the circuit breaker 100 shown in Figure 1 is for exemplary purposes only and that in alternate embodiments the circuit breaker 100 may include any suitable components for causing the operation of the circuit breaker 100 in accordance with the exemplary embodiments. The circuit breaker 100 may be any suitable type of circuit breaker 100 capable of handling any suitable voltage and/or current loads. In one example, the circuit breaker 100 may include line terminals 101 A, 101 B and load terminals 102A, 102B for connecting, for example, an alternating current (AC) power source 101 and a load 102 to the circuit breaker 100, an actuator lever 103 for manually tripping and resetting the circuit breaker 100, circuit breaker contacts 110 that selectively allow current to flow between the line terminals 101 A, 101B and the load terminals 102A, 102B of the circuit breaker 100, an actuator mechanism 104 that forces the circuit breaker contacts 110 together or apart for effecting the selective flow of current through the circuit breaker 100, and a solenoid 120 for effecting movement of the actuator mechanism 104. It is noted that tripping the circuit breaker either manually or upon detection of a fault within a circuit associated with the circuit breaker includes, for example, releasing an operating mechanism (which may include e.g. the actuator mechanism 104) for separating the circuit breaker contacts.

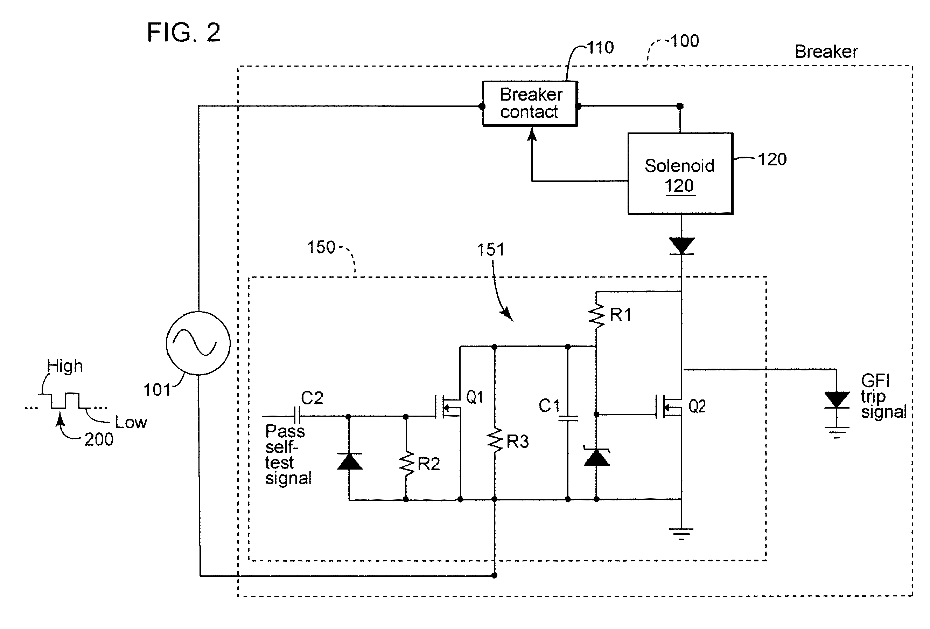

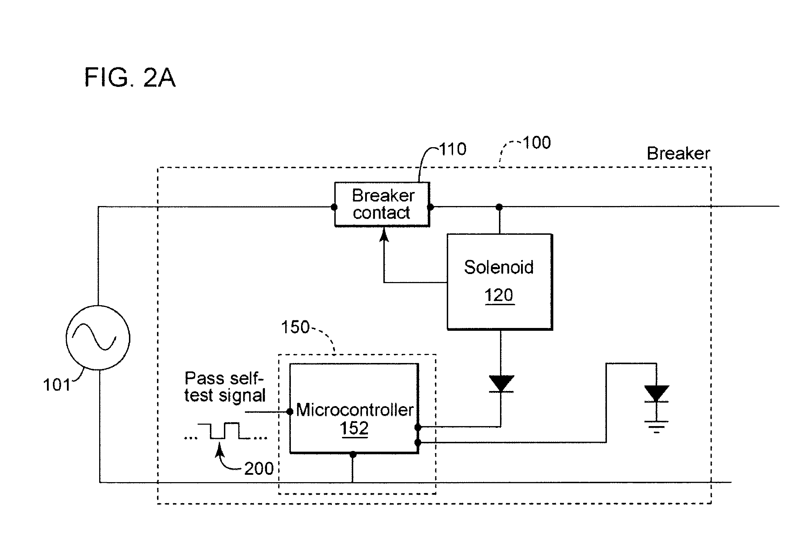

In one exemplary embodiment, the circuit breaker 100 includes an electronic trip unit 135 that may include an interrupter 130 including, as non-limiting examples, an arc fault circuit interrupter (AFCI), a ground fault circuit interrupter (GFCI) and/or any other suitable circuit interrupter. The electronic trip unit 135 can also include an electronics unit 140. The interrupter 130 may be configured to detect any suitable fault within the circuit such as, for example, a ground fault, an arc fault and/or overcurrent fault and cause actuation of the solenoid 120 for tripping the circuit breaker 100. The electronics unit 140 may be configured for operating the interrupter 130. In one example, the electronics unit 140 may be configured to perform an automatic test on itself and/or the interrupter 130. The electronics unit 140 may generate a pass signal 200 (Fig. 2) when the electronic trip unit 135 passes the automatic test. The pass signal 200 may be any suitable signal, such as for example, a changing pulse train signal or any other periodic signal having for example HIGH and LOW or other discernable signal components. Here the pulse train may be a square wave that periodically changes voltage between high and low voltage values corresponding to the HIGH and LOW signal components. In this example, the circuit breaker also includes a self-test trip unit 150 including circuitry that is configured to receive the pass signal 200 from the electronics unit 140.

Referring now to Figure 2, an exemplary self-test trip unit 150 will be described in greater detail in accordance with an exemplary embodiment. It should be understood that the components of the self-test trip unit 150 described herein are for exemplary purposes only and in alternate embodiments any suitable components may be used to cause operation of the circuit breaker 100 without departing from the scope of the exemplary embodiments. In one example, the self-test trip unit 150 includes self-test circuit 151 that issues a trip signal to cause the circuit breaker 100 to trip if the pass signal does not change periodically, is no longer produced by the electronics unit 140, or if the electronics unit 140 (and/or interrupter 130) otherwise does not pass the automatic test. In this example, a capacitor C1 of the self-test circuit 151 causes switching device Q2 to turn on if the pass signal 200 does not change between, for example, the HIGH and LOW signal components causing a short to ground for tripping the circuit breaker 100 as will be described in greater detail below. The switching device Q2 may be any suitable switch including, but not limited to, silicon controlled rectifiers and any suitable transistors. A non-limiting example of a transistor includes field effect transistors.

In the default state of the self-test circuit 151 (e.g. when the pass signal is not changing or is not provided), the capacitor C1 is charged by providing current/voltage to the capacitor C1 through, for example, the solenoid 120. In alternate embodiments, the current/voltage for charging capacitor C1 may be provided in any suitable manner such as directly from the AC power source, through for example, an electrical lead and diode connecting the capacitor C1, through resistor R1, to for example the breaker contact 110. As the capacitor C1 is charged the gate voltage at switching device Q2 increases to a threshold level. When the gate voltage at switching device Q2 reaches the threshold level the switching device Q2 is turned on causing, for example, a short to ground for effecting the tripping of the circuit breaker 100 through, for example, actuation of solenoid 120. As can be seen in Figure 2, the current for charging C1 passes through resistor R1. Resistor R1 may be configured to provide suitable resistance for allowing a predetermined current flow so that a charge stored at capacitor C1 reaches the threshold voltage level of switching device Q2 at a predetermined time interval or period (hereinafter referred to as the "trip time interval"). In this example, the capacitor C1 and resistor R1 form a timeout filter where upon expiration of the trip time interval (e.g. charging of capacitor C1 to the threshold voltage level) the circuit breaker 100 is tripped by turning on switching device Q2. It should be understood that where the current/voltage for charging capacitor C1 is provided through the solenoid 120, the amount of current passing through the solenoid is not sufficient for causing actuation of the solenoid 120.

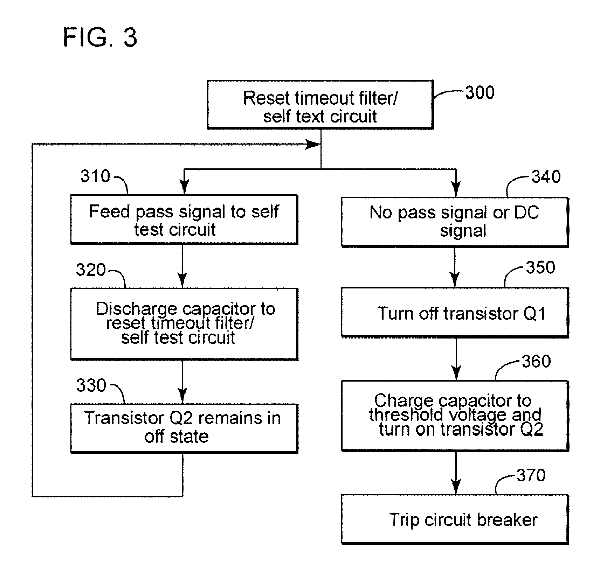

In this example the timeout filter (and/or self-test circuit 151) is reset upon power up of the circuit breaker (e.g. when the breaker contacts 110 are closed) (FIG. 3, Block 300). In alternate embodiments the timeout filter can be reset at any suitable time. The pass signal 200 may be fed by the electronics unit 140 into AC coupling capacitor C2 of the self-test trip unit 150 (FIG. 3, Block 310). Capacitor C2 may be any suitable capacitor, such as for exemplary purposes only, a non-polarized capacitor. The AC coupling capacitor C2 may be configured to allow for the activation of switching device Q1 (as will be described below) as long as the pass signal 200 alternates between, for example, the HIGH or LOW signal components. The switching device Q1 may be any suitable switching device including, but not limited to, silicon controlled rectifiers and any suitable transistors as described above with respect to switching device Q2. It should be understood that the HIGH and LOW notations are used for exemplary purposes only and that operation of the self-test trip unit 150 may be maintained as described herein if the HIGH and LOW notations are reversed or other signal differentiations are used in lieu of HIGH and LOW signals. In accordance with the exemplary embodiment, during operation of the electronic trip unit 135, each time the pass signal 200 transitions from, for example, the LOW signal component to the HIGH signal component the switching device Q1 is turned on causing capacitor C1 (which may be substantially similar to capacitor C2) to discharge so that the timeout filter and/or self-test circuit 151 are reset (FIG. 3, Block 320). As capacitor C1 is periodically discharged (e.g. the self-test circuit/timeout filter is reset) each time the pass signal 200 transitions to the HIGH signal component, the threshold voltage for turning on switching device Q2 is not reached and the switching device Q2 remains in an off state (e.g. the circuit breaker is not tripped and the circuit remains operable) (FIG. 3, Block 330). As such, it should be understood that the frequency of the pass signal 200 may be less than the trip time interval (e.g. the R1-C1 time constant) so that the during normal operation of the electronic trip unit 135 the self-test circuit/timeout filter is reset before capacitor C1 charges to the threshold voltage level of switching device Q2 (e.g. the expiration of the trip time interval).

As described above, the pass signal 200 is generated by the electronics unit 140 only when the electronic trip unit 135 has passed the automatic test. As such, when the electronic trip unit fails the automatic test or otherwise fails to produce the pass signal, any signal produced by the electronics unit 140 may not alternate between HIGH and LOW signal components (e.g. resulting in a direct current (DC) or non-alternating signal) or there may be no signal at all produced by the electronics unit 140 (FIG. 3, Block 340). In this case the current/voltage that is built up at switching device Q1 and/or capacitor C2 may discharge through resistor R2 and/or resistor R3 causing switching device Q1 to turn off (FIG. 3, Block 350). Switching the switching device Q1 off stops the discharging of capacitor C1 and allows the current/voltage supplied from, for example, solenoid 120 to charge the capacitor C1 to the threshold voltage for turning on switching device Q2 (FIG. 3, Block 360). Turning on switching device Q2 may allow current flow to ground causing actuation of the solenoid 120 for tripping the circuit breaker 100 (FIG. 3, Block 370).

In another example, referring to Fig. 2A, the self-test trip unit 150 includes a microcontroller 152 with a clock function. The microcontroller 152 may be configured to issue a trip signal to cause the circuit breaker 100 to trip if the pass signal does not change periodically, is no longer produced by the electronics unit 140, or if the electronics unit 140 (and/or interrupter 130) otherwise does not pass the automatic test. It should be understood that in this example, the self-test trip unit 150 may also include other devices in addition to the microcontroller 152 including, as non-limiting examples, one or more switches, resistors and capacitors substantially similar to those described above.

It should be understood that while the self-test trip circuit 150 is described above as being separate from the electronics unit 140, in alternate embodiments the self-test trip unit 150 may be part of or integrated with the electronics unit 140 or any other suitable part of the circuit breaker 100.

The exemplary embodiments provide for continuos self-testing of an electronic trip unit 135 of a circuit breaker without disrupting power supplied through the circuit breaker 100 to the load 102. In accordance with the exemplary embodiments, the circuit breaker is tripped upon detection of a ground fault through, for example, the interrupter 130 or upon detection of improper operation of the electronic trip unit 135 (which may include the interrupter 130 and/or the electronics unit 140). The continuos self-testing of the electronic trip unit 135 allows for the detection of a loss of, for example, ground fault protection of the circuit breaker without manually testing the circuit breaker.

While embodiments have been described in connection with what are presently considered to be the most practical and preferred embodiments, it is to be understood that the embodiments are not limited to those disclosed herein. Rather, the embodiments described are intended to cover all of the various modifications and equivalent arrangements included within the spirit and scope of the appended claims.
Aspects of the present invention are defined in the following numbered clauses:
1. An apparatus for monitoring a circuit breaker comprising:
   an electronics unit, the electronics unit being configured to generate a re-occurring signal; and
   a self-test trip unit in signal communication with the electronics unit and being configured to receive the re-occurring signal and effect tripping of the circuit breaker.
2. The apparatus of clause 1, wherein the self-test trip unit effects tripping of the circuit breaker when an occurrence of the re-occurring signal is not received within a predetermined period.
3. The apparatus of clause 2, wherein the self-test trip unit includes a microcontroller having a clock function.
4. The apparatus of clause 1, wherein the re-occurring signal comprises a pulse train signal.
5. The apparatus of clause 4, wherein the self-test trip unit comprises a first resistor and a first capacitor forming the timeout filter and a first switching device, wherein charging the first capacitor to a threshold level causes operation of the first switching device for tripping the circuit breaker.
6. The apparatus of clause 5, wherein the self-test trip unit further comprises a second capacitor and a second switching device, the second capacitor being configured to allow passage of the re-occurring signal such that the re-occurring signal causes operation of the second switching device for discharging the first capacitor within a predetermined period.
7. The apparatus of clause 6, wherein discharging the first capacitor within the predetermined period substantially prevents operation of the first switching device and maintains the circuit breaker in a non-tripped condition.
8. The apparatus of clause 1, wherein the circuit breaker comprises one or more of a ground fault circuit interrupter and an arc fault circuit interrupter.
9. The apparatus of clause 1, wherein the predetermined period of the self-test trip unit is reset at each occurrence of the re-occurring signal.
10. A circuit breaker comprising:
   an interrupter configured to detect a predetermined electrical condition of circuit protected by the circuit breaker and cause a tripping of the circuit breaker upon detection of the predetermined electrical condition;
   an electronics unit, the electronics unit being configured to generate a signal; and
   a self-test trip unit being configured to receive the signal and effect tripping of the circuit breaker when a re-occurring pulse of the signal is not received within a predetermined time interval.
11. The circuit breaker of clause 10, further comprising a solenoid configured to open contacts of the circuit breaker wherein actuation of the solenoid is caused by one of the interrupter or the self-test trip unit.
12. The circuit breaker of clause 10, wherein the self-test trip unit includes a microcontroller having a clock function.
13. The apparatus of clause 10, wherein the self-test trip unit comprises a first resistor and a first capacitor forming a timeout filter and a first switching device, wherein charging the first capacitor to a threshold level causes operation of the first switching device for tripping the circuit breaker.
14. The apparatus of clause 13, wherein the self-test trip unit further comprises a second capacitor and a second switching device, the second capacitor being configured to allow passage of the pulse signal such that the pulse signal causes operation of the second switching device for discharging the first capacitor within the predetermined time interval.
15. The apparatus of clause 14, wherein discharging the first capacitor within the predetermined time interval substantially prevents operation of the first switching device.
16. The apparatus of clause 10, wherein a frequency of the re-occuring pulse is less than the predetermined time interval.
17. A method for tripping a circuit breaker comprising:
   producing a pulse signal;
   receiving the pulse signal in a self-test trip unit of the circuit breaker; and
   tripping the circuit breaker if the pulse signal is not received within a predetermined time interval of a time out filter of the self-test trip unit.
18. The method of clause 17, wherein tripping the circuit beaker is effected by a microcontroller of the circuit breaker where the microcontroller includes a clock function.
19. The method of clause 17, wherein a frequency of the pulse signal is less than the predetermined time interval.
20. The method of clause 19, further comprising charging a first capacitor of the self-test trip unit to a threshold voltage, wherein when the threshold voltage is reached a first switching device of the self-test trip unit is turned on causing tripping of the circuit breaker.
21. The method of clause 20, further comprising discharging a second capacitor of the self-test trip unit for causing a second switching device to turn off, wherein turning off the second switching device allows charging of the first capacitor.
22. The method of clause 20, wherein the pulse signal causes periodic operation of a second transistor of the self-test trip unit for discharging the first capacitor within the predetermined time interval.
23. The method of clause 19, further comprising tripping the circuit breaker if a fault is detected by a ground fault circuit interrupter or an arc fault circuit interrupter of the circuit breaker.
24. The method of clause 19, wherein the pulse signal is produced only when the electronics unit passes an automatic test.

## Claims

1. An apparatus for monitoring a circuit breaker (100) comprising:
an electronics unit (140), the electronics unit (140) being configured to generate a re-occurring signal; and
a self-test trip unit (150) in signal communication with the electronics unit (140) and being configured to receive the re-occurring signal and effect tripping of the circuit breaker (100).

2. The apparatus of claim 1, wherein the self-test trip unit (150) effects tripping of the circuit breaker (100) when an occurrence of the re-occurring signal is not received within a predetermined period.

3. The apparatus of claim 1 or claim 2, wherein the self-test trip unit includes a microcontroller having a clock function.

4. The apparatus of any one of the preceding claims, wherein the re-occurring signal comprises a pulse train signal.

5. The apparatus of any one of the preceding claims, wherein the self-test trip unit (150) comprises a first resistor and a first capacitor forming the timeout filter and a first switching device, wherein charging the first capacitor to a threshold level causes operation of the first switching device for tripping the circuit breaker.

6. The apparatus of claim 5, wherein the self-test trip unit (150) further comprises a second capacitor and a second switching device, the second capacitor being configured to allow passage of the re-occurring signal such that the re-occurring signal causes operation of the second switching device for discharging the first capacitor within a predetermined period.

7. The apparatus of claim 5 or claim 6, wherein discharging the first capacitor within the predetermined period substantially prevents operation of the first switching device and maintains the circuit breaker in a non-tripped condition.

8. The apparatus of any one of the preceding claims, wherein the circuit breaker (100) comprises one or more of a ground fault circuit interrupter and an arc fault circuit interrupter.

9. The apparatus of any one of the preceding claims, wherein the predetermined period of the self-test trip unit is reset at each occurrence of the re-occurring signal.

10. A circuit breaker (100) comprising:
an interrupter (130) configured to detect a predetermined electrical condition of circuit protected by the circuit breaker and cause a tripping of the circuit breaker upon detection of the predetermined electrical condition;
an electronics unit (135), the electronics unit being configured to generate a signal; and
a self-test trip unit (150) being configured to receive the signal and effect tripping of the circuit breaker when a re-occurring pulse of the signal is not received within a predetermined time interval.

11. The circuit breaker (100) of claim 10, further comprising a solenoid (120) configured to open contacts of the circuit breaker (100) wherein actuation of the solenoid (120) is caused by one of the interrupter (130) or the self-test trip unit (150).

12. The apparatus of claim 10 or claim 11, wherein the self-test trip unit (150) comprises a first resistor and a first capacitor forming a timeout filter and a first switching device, wherein charging the first capacitor to a threshold level causes operation of the first switching device for tripping the circuit breaker.

13. The apparatus of claim 12, wherein the self-test trip unit (150) further comprises a second capacitor and a second switching device, the second capacitor being configured to allow passage of the pulse signal such that the pulse signal causes operation of the second switching device for discharging the first capacitor within the predetermined time interval; and
wherein discharging the first capacitor within the predetermined time interval substantially prevents operation of the first switching device.

14. A method for tripping a circuit breaker (100) comprising:
producing a pulse signal;
receiving the pulse signal in a self-test trip unit of the circuit breaker; and
tripping the circuit breaker if the pulse signal is not received within a predetermined time interval of a time out filter of the self-test trip unit.

15. The method of clause 14, further comprising charging a first capacitor of the self-test trip unit to a threshold voltage, wherein when the threshold voltage is reached a first switching device of the self-test trip unit is turned on causing tripping of the circuit breaker.
